# EUROPÄISCHE PATENTSCHRIFT

(11) **EP 3 551 478 B1**
(45) Veröffentlichungstag und Bekanntmachung des Hinweises auf die Patenterteilung: **30.12.2020**
(21) Anmeldenummer: 17826283.8
(22) Anmeldetag: 06.12.2017
(51) Int. Cl.: B60C 11/24, B60C 23/04

(54) **VERFAHREN UND VORRICHTUNG ZUR FESTSTELLUNG DES VERSCHLEISSES AN MINDESTENS EINEM REIFEN EINES FAHRZEUGS**
METHOD AND DEVICE FOR DETERMINING THE WEAR OF A TIRE
MÉTHODE ET DISPOSITIF POUR DÉTERMINER L'USURE D'UN PNEUMATIQUE

(30) Priorität: 06.12.2016 DE 102016014449
(43) Veröffentlichungstag der Anmeldung: 16.10.2019
(73) Patentinhaber: Pieper, Jörg, 37083 Göttingen (DE); Nowicki, Herbert, 78467 Konstanz (DE)
(72) Erfinder: ACHTERHOLT, Rainer, 8280 Kreuzlingen (CH)
(74) Vertreter: Heisel, Wolfgang
(86) Internationale Anmeldenummer: PCT/IB2017/057679
(87) Internationale Veröffentlichungsnummer: WO 2018/104876

(56) Entgegenhaltungen:
- EP-A1- 2 172 759
- EP-A1- 3 020 578
- DE-A1-102005 052 476

## Beschreibung

### Technisches Gebiet

Die Erfindung bezieht sich auf ein Verfahren und Vorrichtung zur Feststellung des Verschleisses an mindestens einem Reifen eines Fahrzeugs, wobei das Fahrzeug ein Reifendruckkontrollsystem aufweist, bestehend aus einem Drucksensor, einer Sende- und Empfangseinheit sowie einer Rechnereinheit und einen Datenspeicher mit einer Datenbank.

### Stand der Technik

Die Reifen eines Fahrzeugs verschleissen während des Betriebs eines Fahrzeugs. Mit der Zeit kann sich das Profil der Reifen bis zu einem Punkt abnutzen, dass ein Ersetzen der Reifen erforderlich wird. Eine angemessene Kontrolle ist erforderlich.

So ist beispielsweise aus der DE 10 2014 112 306 A1 eine Reifenprofiltiefenmesseinrichtung bekannt, die dauerhaft die Profiltiefe des Reifens feststellt und an eine Zentraleinheit innerhalb des Fahrzeugs übermittelt. Hierzu ist es notwendig, dass in die Lauffläche, die das Profil des Reifens umfasst, ein Sensorelement eingebracht wird, das durch entsprechende radiale Anordnung und durch den Verschleiss hervorgerufene Längenverkürzung ein Signal proportional zur tatsächlich vorhanden Profiltiefe übermittelt. So kann auf eine tatsächliche Profiltiefe des Reifens geschlossen werden.

Betriebskosten, Standzeiten und Verkehrssicherheit sind wesentliche Merkmale, die für Flottenbetreiber von Fahrzeugen von hoher Wichtigkeit sind. Um hier tatsächliche Werte zu erhalten, sind Systeme bekannt, mit denen wichtige Daten von Fahrzeugen erfasst und archiviert werden können. Auch Daten über Reifen, deren Druck und Temperatur können entsprechend gemessen und damit ermittelt und dargestellt und archiviert werden.

Aus der EP 3020578 A1 ist ein System zur Schätzung einer Last, die von einem Fahrzeugreifen getragen wird bekannt. Dabei umfasst das System folgende Komponenten:
- einen Fahrzeugreifen mit einem Reifenhohlraum;
- einen Befülldruckmesssensor, der an dem Reifen befestigt ist, um ein Befülldruckniveau innerhalb des Reifenhohlraums zu messen;
- einen Kontaktflächenlängensensor, der an dem Reifen befestigt ist, um die Kontakflächenlänge von dem Reifen zu messen, wenn der Reifen auf einer Bodenoberfläche abrollt und eine Reifenlast trägt;
- einen Reifenrollgeschwindigkeitssensor, um eine Rollgeschwindigkeit von dem Reifen zu messen; und
- einen Reifenlastrechner, um eine Reifenlast aus der Kontaktstellenlänge, dem Befülldruckniveau und der Reifenrollgeschwindigkeit zu schätzen.
Dabei ist vorgesehen, dass das System weiter einen Reifenverschleißzustandsschätzrechner umfasst, um einen Reifenverschleißzustand von einem Profil des Reifens zu schätzen, und dass der Reifenlastrechner bei der Schätzung von der Reifenlast konfiguriert ist, um den geschätzten Reifenverschleisszustand bei Betrieb als eine Kompensierungsfaktoreingabe zu verwenden.

In der EP 2 172 759 A1 ist Verfahren zum Schätzen der Abnutzung eines Reifens beschrieben. Hierin wird eine Zeitreihenwellenform der Radialbeschleunigung der Reifenlauffläche unter Verwendung eines Beschleunigungssensors, der in einem Innenauskleidungsbereich des Reifens angeordnet ist, ermittelt. Anschliessend wird ein Deformationsgeschwindigkeitsindex auf der Grundlage von Eingabeinformation aus der ermittelten Zeitreihen-Wellenform dieser Radialbeschleunigung gewonnen. Ein Differenzspitzenwert, der die Größe der Spitze einer zeitlich differenzierten Wellenform darstellt, wird durch zeitliche Differenzierung der Zeitreihen-Wellenform dieser Radialbeschleunigung ermittelt. In einem danach folgenden Schritt wird ein standardisierter Deformationsgeschwindigkeitsindex aus folgenden Werten gewonnen wird: aus einem Differenzspitzenwert an einem vorderen Aufstandsflächenrand, der eine Differenzspitzengröße an einer Vorderrandseite der Reifenlauffläche darstellt und der als der Deformationsgeschwindigkeitsindex aus einer Zeitdifferenz-Wellenform berechnet wird, die durch zeitliche Differenzierung der Zeitreihen-Wellenform der Deformationsgeschwindigkeit gewonnen wird, und aus einem Differentialspitzenwert an einem hinteren Aufstandsflächenrand, der eine Differenzspitzengröße an einer Hinterkantenseite der Reifenlauffläche darstellt und der als der Deformationsgeschwindigkeitsindex aus einer Zeitdifferenz-Wellenform berechnet wird, die durch zeitliche Differenzierung der Zeitreihen-Wellenform der Deformationsgeschwindigkeit gewonnen wird, und wobei die gewonnenen Indizes dieser Deformationsgeschwindigkeiten auf der Grundlage von Information über die Umlaufzeit des Reifens oder von Information über die Umlaufgeschwindigkeit des Reifens standardisiert werden und wobei aus den beiden standardisierten Differenzialspitzenwerten am vorderen Rand und am hinteren Rand ein Mittelwert zwischen diesen Differenzspitzenwerten am vorderen und hinteren Rand als der Deformationsgeschwindigkeitsindex berechnet wird. Hieraus wird der Grad der Reifenabnutzung anhand der Größe des standardisierten Deformationsgeschwindigkeitsindexes geschätzt.

In der DE 10 2005 052 476 A1 ist ein Verfahren zur individuellen Abschätzung des aktuellen und durchschnittlichen Verschleißes eines in einem Fahrzeug verwendeten Reifens während des Betriebes des Fahrzeuges beschrieben. Dieses umfasst ein Fahrzeug-Datenbus-System und Raddrehzahlsensoren, wobei die erforderlichen Fahrzeugdaten, mit denen die Historie der Betriebsbedingungen des Fahrzeugs ermittelt wird, erfasst werden. Durch das Verfahren soll unter anderem bestimmt werden, wann die Profiltiefe eines Fahrzeugreifens einen bestimmten Wert erreicht hat und rechtzeitig ein Hinweis darauf an den Nutzer des Fahrzeugs abgegeben werden. Hierzu wird der Verschleiß des Fahrzeugreifens zumindest aus den Kenngrößen Längsbeschleunigung bzw. Längsbelastung, die sich aus den Beschleunigungs- bzw. Bremsvorgängen des Fahrzeuges ergibt, am Reifen angreifende Querkräfte ermittelt. Beim Erreichen einer bestimmten Stufe der maximalen Laufleistung des Reifens wird ein akustisches und/oder visuelles Signal ausgegeben.

### Nachteile des Standes der Technik

Die Profiltiefenmessung erfordert einen hohen Aufwand, da der Sensor für die Profiltiefenmessung genau radial platziert werden muss und dann zu kalibrieren ist.

Zudem wird nur eine Stelle am Reifen gemessen, so dass ungleichmässige Abnutzung nicht sichtbar berücksichtigt werden kann.

Die Systeme für die Reifenprofiltiefenmessung sind sehr komplex und in der Regel bedarf es eigentlich nicht der absoluten Messung der Profiltiefe, sondern vielmehr der Einschätzung, welche tatsächliche Laufleistung hat, die aber mit einfachen Mitteln zu erreichen ist.

### Aufgabe der Erfindung

Die Aufgabe der Erfindung besteht darin, ein Verfahren und eine Vorrichtung bereitzustellen, die ein einfaches Feststellen des Verschleisses eines Reifens ermöglichen.

### Lösung der Aufgabe

Die Lösung der Aufgabe wird durch die Merkmale von Anspruch 1 oder Anspruch 5 bereitgestellt.

### Vorteile der Erfindung

Der Grundgedanke der Erfindung besteht darin, dass die Länge der Mantelfläche des Reifens, der an dem Fahrzeug zum Einsatz kommt, gemessen wird. Denn diese ist ein Mass für den Verschleiss und damit den Gebrauch des Reifens. Ausgehend von einem vom Reifenhersteller definierten Reifenumfang und damit einer Mantelfläche mit einer Länge L = 2*π*r, wobei r der Radius des Reifens ist, verringert sich der Radius bei entsprechenden Benutzung und damit die Länge der Mantelfläche. Die Länge der Abwicklung eines neuen Reifens ist damit längenmässig grösser als die Länge Abwicklung eines benutzen Reifens.

In Verwendung dieses Grundgedankens kann mit einem Sensor, angeordnet am oder in dem Reifen, die Umdrehung des Rades festgestellt werden. Geht man von dem Beispiel aus, dass die Länge der Mantelfläche des Reifens 3 Meter beträgt und der Reifen sich mit 5 km/h dreht, so benötigt eine Umdrehung die Zeit x Sekunden. Ein Reifen, der abgenutzt ist, weist eine geringere Länge der Mantelfläche auf, beispielsweise 2,95 Meter. Dies entspricht einer Reduzierung der Profilhöhe von 2,5 mm. Dreht der Reifen nun mit der Geschwindigkeit 5 km/h so benötigt eine Umdrehung die Zeit y Sekunden. Aufgrund der Abnutzung ist x>y, d.h. die Zeit bei abgenutztem Reifen ist kürzer.

Um technisch diesen Grundgedanken umzusetzen, ist bei einer ersten Ausführung der Erfindung ein Sensor vorgesehen, der mit einem ortsfesten Sensor an der Karosserie korrespondiert, so dass jeweils eine vollständige Umdrehung des Rades festgestellt werden kann. Dabei erzeugt der Sensor ein Datenelement, das an das in dem Rad vorhandene System weitervermittelt wird. Das System ist ein Reifendruckkontrollsysteme (zu RDKS, RDK oder RDC abgekürzt) bzw. Tire pressure monitoring systems (TPMS) und dient der Überwachung des Reifendrucks und der Temperatur der Reifen bei Fahrzeugen. Bei solchen sogenannten direkt messenden Systemen erfasst ein Drucksensor den Innendruck und die Lufttemperatur eines Reifens. Diese Informationen werden zusammen mit einem Identifikator (der zur Identifizierung des Rades dient, an dem gemessen worden ist) in gewissen Intervallen bzw. Messsequenzen über Funk an ein Steuergerät im Fahrzeug übertragen. Diese Systeme können schleichende oder auch plötzliche Druckverluste an allen Reifen erkennen, da sie direkt den Druck überwachen. Je nach Anzeigekonzept bekommt der Fahrer eine Information über den aktuellen Druckwert im Klartext, die er entweder ständig in der Anzeige sieht, oder über Knopfdruck abfragen kann oder auch nur eine Warnung bei zu geringem Reifendruck. Diese Übermittlung des Systems nutzt auch das zuvor beschriebene Datenelement. In Verbindung mit der zum Zeitpunkt der Messung festgestellten Geschwindigkeit kann dann die Länge L der Mantelfläche des jeweiligen Reifens berechnet und gespeichert werden. Im darauffolgenden Messsegment (Intervall) wird der Messvorgang wiederholt. Ist die Zeit y kürzer als die Zeit y, die vor dem Messsegment ermittelt worden ist, so hat sich der Reifen weiter abgenutzt. Diese Zeit wird gespeichert, um sie mit dem weiteren Messsegmenten zu vergleichen.

Um vergleichbare Messwerte zu erhalten, werden die Messsegmente unter zumindest vergleichbaren Bedingungen durchgeführt. Auch hier werden die jeweiligen Daten gespeichert, um einen Vergleich vorzunehmen. Diese gleichen Bedingungen liegen dann vor, wenn Geschwindigkeit, Reifentemperatur und Reifendruck zum vorherigen Messsegment vergleichbar sind. Vorteilhafte Sensoren agieren bidirektional. Dies bedeutet, dass Messungen auch auf Anforderung durch das System oder manuell ausgelöst werden können.

Alternativ kann zur Umsetzung ein Gyroskop-Sensor eingesetzt werden. Ein Gyroskop-Sensor ist ein Beschleunigungs- oder Lagesensor, der auf kleinste Beschleunigungen, Drehbewegungen oder Lageänderungen reagiert. Das Prinzip des Gyroskop-Sensors basiert auf der Massenträgheit und wird u.a. in Fliehkraftreglern eingesetzt. Die von einem Gyroskop-Sensor erfassten Drehbewegungen werden in einer Spannungsänderung bezogen auf die Drehgeschwindigkeit angegeben: Millivolt pro Grad Drehbewegung pro Sekunde (V/Grad/s). Dabei stellt der Gyroskop-Sensor eine Umdrehung fest und sendet dieses Datensegment an das vorhandene System, bei dem - wie oben beschrieben - die Länge der Mantelfläche dann berechnet wird.

Ein solcher Sensor ist ein kleines Bauelement, welches auf der Innenseite des Reifens, beispielsweise im Ventilbereich oder auch auf der Felge angeordnet werden kann. Es unterliegt nicht dem Verschleiss.

Auf einer Messstrecke von 5000 m ergeben sich nach dem Verfahren folgende Werte:
Ein Reifen mit einer Länge L = 3,00 m der Mantelfläche rollt mit einer Geschwindigkeit von 5 km/h über eine ebene Fläche. Dabei weist er 1666 Umdrehungen/Stunde auf. Vergleicht man einen Reifen mit einer Mantelfläche von L = 2,95 m, wobei der Reifen mit einer Geschwindigkeit von 5 km/h über eine ebene Fläche rollt, so legt dieser 1694 Umdrehungen/Stunde zurück. Ein Reifen mit einer Länge L = 2,90 m der Mantelfläche rollt mit einer Geschwindigkeit von 5 km/h über eine ebene Fläche. Dabei weist er 1724 Umdrehungen/Stunde auf. Eine Längenreduzierung von L = 3,00 m auf L = 2,95m führt zu einer Profilhöhenreduktion um 2,5mm. Eine Längenreduzierung von L = 3,00 m auf L = 2,90m führt zu einer Profilhöhenreduktion um 5,0 mm.

Durch einen einfach aufgebauten Sensor und die Kopplung mit einem im Fahrzeug vorhandenen TPMS System kann auf sehr einfache Weise die Abnutzung des Reifens festgestellt werden.

Weitere vorteilhafte Ausgestaltungen gehen aus der nachfolgenden Beschreibung sowie den Ansprüchen hervor.

### Zeichnungen

Es zeigen:
- Fig. 1: eine Prinzipdarstellung der Anordnung der Vorrichtung zur Feststellung des Reifenverschleisses;
- Fig. 2: ein Schema zur Darstellung des Verfahrens zur Feststellung des Reifenverschleisses eines Fahrzeugs.

### Beschreibung eines Ausführungsbeispiels

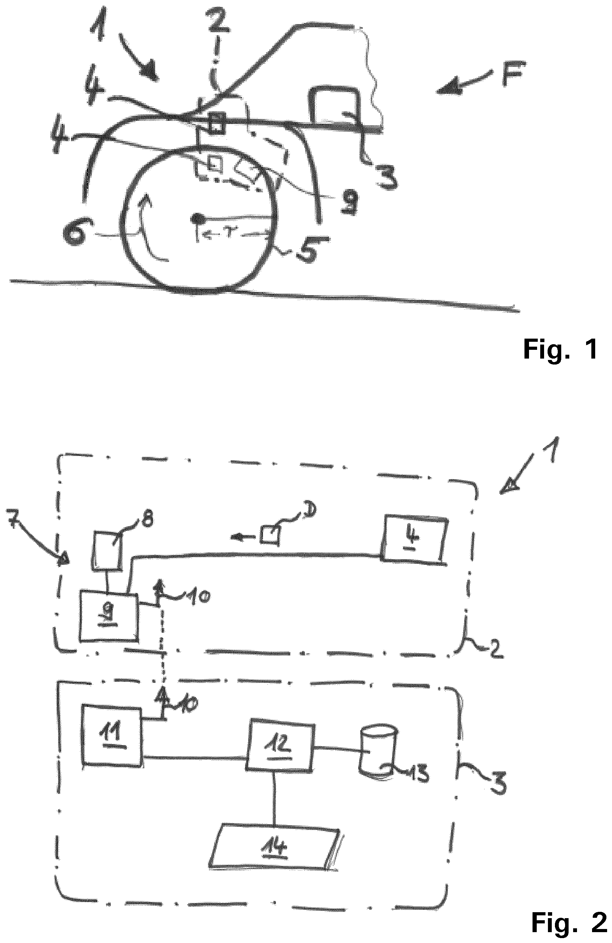

In Fig. 1 und 2 ist das Prinzip des Verfahrens zur Feststellung eines Reifenverschleisses eines Fahrzeugs F mit mindestens einem Reifen 5 dargestellt. Der Reifen 5 dreht entweder in Drehrichtung 6 oder gegen diese. Die Vorrichtung 1 zur Durchführung des Verfahrens umfasst eine erste Baugruppe 2 sowie eine zweite Baugruppe 3. Die erste Baugruppe 2 ist zur Aufnahme der Daten vorgesehen, wobei die zweite Baugruppe 3 zur Auswertung und Darstellung der Ergebnisse aus den Daten vorgesehen ist.

Die erste Baugruppe 2 umfasst den Sensor 4 zur Feststellung der Umdrehung eines Reifens 5. Dieser Sensor 4 ist entweder als Gyroskop-Sensor ausgebildet oder er wirkt - wie in Fig. 1 dargestellt - mit einem weiteren Sensor, der an der Karosserie des Fahrzeugs F ortsfest angeordnet ist, zusammen. Zudem ist ein Reifendruckkontrollsystem 7 zur Feststellung des Drucks innerhalb des Reifens 5 bestehend aus einem Drucksensor 8 und einer Sendeeinheit 9 zur Erzeugung eines Funksignals 10 vorgesehen.

Die zweite Baugruppe 3 ist mit der ersten Baugruppe 2 über die Funkstrecke bzw. dem von der Sendeeinheit 9 ausgehenden Funksignal 10 gekoppelt. Diese Baugruppe 3 weist eine Empfangseinheit 11 auf. Mit der Empfangseinheit 11 ist eine Rechnereinheit 12 gekoppelt, die wiederum mit einem Datenspeicher 13 zusammenwirkt. Das Ergebnis der Rechnereinheit 12 wird an einer Anzeigeeinheit 14, bevorzugt im Bereich des Fahrzeugführers, dargestellt.

Der Sensor 4 zur Feststellung der Umdrehung des Reifens 5 des Fahrzeugs F sendet nach einer Umdrehung ein Datensegment D bestehend aus der Anzahl der Umdrehungen und der Zeit. Das Datensegment D wird über die Funkstrecke 10 von der Sendeeinheit 9 an die Empfangseinheit 11 übertragen und dort in der gekoppelten Rechnereinheit 12 berechnet. Ausgehend von einem vom Reifenhersteller definierten Reifenumfang und damit einer Mantelfläche mit einer Länge L = 2*π*r, wobei r der Radius des Reifens 5 ist, verringert sich der Radius r bei entsprechender Benutzung. Daher wird zunächst in dem Datenspeicher 13 die Länge L der Mantelfläche des neuen Reifens 5 hinterlegt. Die Berechnung des in Messsegmenten bereitgestellten Datensegments D erfolgt nun in der Rechnereinheit 12, so dass ein neuer Wert L, der der tatsächlichen Länge der Mantelfläche des Reifens 5 entspricht. Dieser neue Wert L wird mit dem hinterlegten Wert L in der Datenbank verglichen.

Ist die Zeit für eine Umdrehung pro Reifen nun kürzer und damit die Länge der Mantelfläche L kürzer als es bereits abgespeichert ist, so wird der neue Wert abgespeichert, derart dass dieser für den neuen Vergleich bereitsteht.

Hat die tatsächliche Länge L der Mantelfläche des Reifens 5 einen zuvor definierten Wert unterschritten, der ebenfalls in dem Datenspeicher 13 hinterlegt ist, so wird im Bereich des Fahrzeugführers angezeigt, dass die mindestens erforderliche Profiltiefe an dem definierten Reifen 5 unterschritten ist. Dies hat zur Folge, dass dieser Reifen gewechselt werden sollte.

Durch das Verfahren kann mittels eines geringen technischen Aufwands die Profiltiefe in Abhängigkeit der tatsächlichen Laufleistung gemessen und bei entsprechender Unterschreitung ein Warnhinweis erteilt werden.

### BEZUGSZEICHENLISTE

### Verfahren und Vorrichtung zur Feststellung des Verschleisses an mindestens einem Reifen eines Fahrzeugs

- 1: Vorrichtung
- 2: erste Baugruppe
- 3: zweite Baugruppe
- 4: Sensor
- 5: Reifen
- 6: Drehrichtung
- 7: Reifendruckkontrollsystem
- 8: Drucksensor
- 9: Sendeeinheit
- 10: Funksignal
- 11: Empfangseinheit
- 12: Rechnereinheit
- 13: Datenspeicher
- 14: Anzeigeeinheit

- D: Datensegment
- F: Fahrzeug
- L: Länge

## Patentansprüche

1. Verfahren zur Feststellung des absoluten Abriebs an mindestens einem Reifen eines Fahrzeugs, wobei das Fahrzeug ein Reifendruckkontrollsystem, bestehend aus einem Drucksensor, einer Sende- und Empfangseinheit sowie einer Rechnereinheit und einen Datenspeicher mit einer Datenbank, aufweist, **gekennzeichnet durch** folgende Verfahrensschritte:
a. Feststellen der vollständigen Umdrehung des Reifens (5) sowie die dafür benötigte Zeit durch einen Sensor (4) und Bereitstellung als Datensegment (D);
b. Übersenden des Datensegments (D) über die Sendeeinheit (9) und Empfangseinheit (11) an die Rechnereinheit (12);
c. Berechnen der Länge L der Mantelfläche des Reifens (5) mit dem Radius r und speichern dieses Werts;
d. Vergleichen der Länge L mit der abgespeicherten Länge des Datensegments (D) in den Datenspeicher (13);
e. Vergleichen mit einem in dem Datenspeicher (13) abgelegten Wert der Länge L, ob die tatsächliche Länge L kürzer, gleichlang oder länger ist;
i. ist die Länge L länger, so wird die Messung wiederholt;
ii. ist die Länge L gleichlang, so wie die Messung wiederholt;
iii. ist die Länge L kürzer, so wird dieser Wert der tatsächlichen Länge in dem Datenspeicher (13) gespeichert und mit einem Mindestwert, der ebenfalls in dem Datenspeicher (13) hinterlegt ist, verglichen;
I. ist die Länge L gleich oder grösser als der Mindestwert, so wird die Messung wiederholt;
II. ist die Länge L kleiner als der Mindestwert, so wird ein Warnhinweis ausgegeben, dass das Reifenprofil-Mindestmass unterschritten ist.

2. Verfahren nach Anspruch 1, **dadurch gekennzeichnet, dass** der Sensor (4) zum Feststellen der Umdrehung ein Gyroskop-Sensor ist.

3. Verfahren nach einem der vorhergehenden Ansprüche, **dadurch gekennzeichnet, dass** der Sensor (8) des Reifendruckkontrollsystem (7) und der Sensor (4) für die Feststellung der Umdrehung des Reifens (5) ein Bauteil ist.

4. Verfahren nach einem der vorhergehenden Ansprüche, **dadurch gekennzeichnet, dass** die benötigte Zeit über die zurückgelegte Strecke und die damit verbundene Geschwindigkeit berechnet wird.

## Claims

1. Method for determining the absolute abrasive wear on at least one tyre of a vehicle, wherein the vehicle has a tyre pressure monitoring system made up of a pressure sensor, a transmission unit and a reception unit and also a computer unit and a data memory with a database, **characterized by** the following method steps:
a. determining the complete revolution of the tyre (5) and also the time required for this by means of a sensor (4) and providing this as a data segment (D);
b. transmitting the data segment (D) by way of the transmission unit (9) and reception unit (11) to the computer unit (12);
c. calculating the length L of the outside surface of the tyre (5) with the radius r and storing this value;
d. comparing the length L with the stored length of the data segment (D) in the data memory (13);
e. comparing with a value of the length L stored in the data memory (13) to ascertain whether the actual length L is shorter, the same, or longer;
i. if the length L is longer, the measurement is repeated;
ii. if the length L is the same, the measurement is repeated;
iii. if the length L is shorter, this value of the actual length is stored in the data memory (13) and compared with a minimum value, which is likewise stored in the data memory (13);
I. if the length L is the same as or greater than the minimum value, the measurement is repeated;
II. if the length L is smaller than the minimum value, a warning message that the tyre profile minimum dimension is no longer met is issued.

2. Method according to Claim 1, **characterized in that** the sensor (4) for determining the revolution is a gyroscope sensor.

3. Method according to either of the preceding claims, **characterized in that** the sensor (8) of the tyre pressure monitoring system (7) and the sensor (4) for determining the revolution of the tyre (5) is a component.

4. Method according to one of the preceding claims, **characterized in that** the time required is calculated on the basis of the distance covered and the related speed.

## Revendications

1. Procédé de détermination de l'usure absolue d'au moins un pneumatique d'un véhicule, dans lequel le véhicule comporte un système de surveillance de la pression des pneumatiques, constitué d'un capteur de pression, d'une unité d'émission et de réception et d'une unité de calcul, et une mémoire de données comprenant une base de données, **caractérisé par** les étapes de procédé suivantes :
a. détermination de la rotation complète du pneumatique (5) et du temps nécessaire à cela par un capteur (4) et leur fourniture sous forme de segment de données (D) ;
b. transmission du segment de données (D) par l'intermédiaire de l'unité d'émission (9) et de l'unité de réception (11) à l'unité de calcul (12) ;
c. calcul de la longueur L de la surface latérale du pneumatique (5) de rayon r et stockage de cette valeur ;
d. comparaison de la longueur L à la longueur stockée du segment de données (D) dans la mémoire de données (13) ;
e. comparaison à une valeur de la longueur L stockée dans la mémoire de données (13) pour savoir si la longueur effective L est inférieure, identique ou supérieure ;
i. si la longueur L est supérieure, alors la mesure est répétée ;
ii. si la longueur L est identique, alors la mesure est répétée ;
iii. si la longueur L est inférieure, alors ladite valeur de la longueur effective est stockée dans la mémoire de données (13) et comparée à une valeur minimale qui est également stockée dans la mémoire de données (13) ;
I. si la longueur L est identique ou supérieure à la valeur minimale, alors la mesure est répétée ;
II. si la longueur L est inférieure à la valeur minimale, un avertissement est émis pour signaler que la dimension de la bande de roulement du pneumatique est devenue inférieure à sa valeur minimale.

2. Procédé selon la revendication 1, **caractérisé en ce que** le capteur (4) destiné à détecter la rotation est un capteur gyroscopique.

3. Procédé selon l'une des revendications précédentes, **caractérisé en ce que** le capteur (8) du système de contrôle de la pression des pneumatiques (7) et le capteur (4) destiné à déterminer la rotation du pneumatique (5) sont un composant.

4. Procédé selon l'une des revendications précédentes, **caractérisé en ce que** le temps nécessaire est calculé sur la distance parcourue et la vitesse qui lui est associée.
